# EUROPÄISCHE PATENTSCHRIFT

(11) **EP 2 263 196 B1**
(45) Veröffentlichungstag und Bekanntmachung des Hinweises auf die Patenterteilung: **25.06.2014**
(21) Anmeldenummer: 08735255.5
(22) Anmeldetag: 15.04.2008
(51) Int. Cl.: G06K 19/077

(54) **RFID SYSTEM**
RFID SYSTEM
SYSTÈME RFID

(43) Veröffentlichungstag der Anmeldung: 22.12.2010
(73) Patentinhaber: Siemens Aktiengesellschaft, 80333 München (DE)
(72) Erfinder: NEIDIG, Jörg, 90403 Nürnberg (DE); SCHARNAGL, Joachim, 90762 Fürth (DE); WELZ, Ulrich, D-91074 Herzogenaurach (DE); WOHLGEMUTH, Wolfgang, 91058 Erlangen (DE)
(86) Internationale Anmeldenummer: PCT/EP2008/002999
(87) Internationale Veröffentlichungsnummer: WO 2009/127226

(56) Entgegenhaltungen:
- EP-A- 1 020 813
- US-A1- 2006 103 534

## Beschreibung

Die Erfindung bezieht sich auf ein RFID System umfassend ein RFID Lesegerät und einer RFID Transpondereinheit, die durch das RFID Lesegerät auslesbar ist.

Die Abkürzung RFID steht für Radio Frequency Identification und bedeutet zu Deutsch die Identifizierung mittels Radiowellen. Die RFID-Technologie findet vermehrt Einsatz zur berührungslosen Identifizierung und Lokalisierung von Gegenständen sowie zur automatischen Erfassung und Speicherung von Daten.

Ein RFID System besteht prinzipiell aus einem RFID Tag, auch RFID Transponder genannt, einem RFID Schreibgerät und/oder einem RFID Lesegerät. Der RFID Transponder ist zum Speichern von Daten vorgesehen, die z.B. von einem RFID Schreibgerät berührungslos zum RFID Transponder übertragen werden können und von dem RFID Lesegerät wiederum berührungslos ausgelesen werden können. Die berührungslose Kommunikation zwischen dem RFID Transponder und dem Schreib- bzw. Lesegerät geschieht über elektromagnetische Wellen. Ein RFID Transponder verfügt daher über eine Antenne, einen analogen Schaltkreis zum Empfangen und Senden, einen digitalen Schaltkreis und einen permanenten Speicher, in dem die zu kommunizierenden Daten abgelegt werden können. Der analoge Schaltkreis und die Antenne sind auf den für die zur Kommunikation vorgesehene Frequenz abgestimmt.

So sind auf dem Markt Niederfrequenz-RFID-Tags erhältlich, die über elektromagnetische Felder im Frequenzbereich 30 bis 500 kHz kommunizieren. Derartige RFID-Systeme sind für geringe Reichweiten geeignet und werden beispielsweise bei Zugangskontrollen und Wegfahrsperren für Automobile eingesetzt.

Hochfrequenz RFID-Tags senden und empfangen im Bereich 3 bis 30 MHz und sind für kurze bis mittlere Reichweiten geeignet.

In der Produktion werden typischerweise solche Hochfrequenz-RFID-Systeme bei einer Übertragungsfrequenz von 13,56 MHz eingesetzt, um Informationen im elektromagnetischen Nahfeld mittels Induktion zu übertragen. Aufgrund der hierbei erzielbaren Reichweite wird sichergestellt, dass einzelne Tags gezielt im Nahbereich angesprochen werden können. Auf diese Art und Weise ist es beispielsweise möglich, Produkte einzeln mit Produktionsdaten wie Produktions- oder Verfalldatum und Produktspezifikationen zu versehen.

Höhere Reichweiten werden im Ultrahochfrequenzbereich, d.h. zwischen 850 und 950 MHz, erzielt. Beispielsweise werden in der Logistik in der Regel RFID-Systeme für 865 MHz eingesetzt, um Informationen mittels elektromagnetischer Wellen im Fernfeld über weite Strecken übermitteln zu können. Aufgrund der im Ultrahochfrequenzbereich erzielbaren höheren Reichweite kann hierbei eine Vielzahl von Tags über eine größere Strecke hin angesprochen werden. Beispielsweise kann auf diese Art und Weise in der Logistik festgestellt werden, welche Produkte sich in einem Lager befinden oder welche Waren gerade ausgeliefert wurden.

Schließlich existieren auch RFID-Systeme, die im Mikrowellen-frequenzbereich mit mehr als 2,4 GHz kommunizieren. Mit derartig hohen Frequenzen lassen sich sehr hohe Lesegeschwindigkeiten erzielen. Dies ist beispielsweise bei Mautstationen notwendig, an denen Fahrzeuge mit sehr hoher Geschwindigkeit passieren und hierbei Daten von RFID-Tags ausgelesen werden sollen.

In der Logistik werden in erster Linie RFID Technologien eingesetzt, die im Ultrahochfrequenzbereich arbeiten. Dies erklärt sich durch die hohe Reichweite, die in diesem Frequenzbereich erzielt werden kann. Denn bei logistischen Anwendungen ist es häufig vorteilhaft, wenn verschiedene mit einem Transponder ausgerüstete Produkte in einem gewissen Umfeld gleichzeitig erkannt werden können.

Jedoch besteht auch bei logistischen Anwendungen häufig der Wunsch, mit einem Transponder versehene Produkte einzeln, das heißt exklusiv, mit einem RFID Schreib-/Lesegerät ansprechen zu können, auch dann, wenn mehrere Transponder im Empfangsbereich des RFID Schreib-/Lesegeräte vorhanden sind. So kommt es beispielsweise beim Transport von Gütern häufig vor, dass diese manuell umgeladen und/oder umsortiert werden müssen. Ein solcher Vorgang soll möglichst automatisch protokolliert und überprüft werden, wofür sich die RFID Technologie an sich anbietet. Ein Beispiel für einen solchen Vorgang ist das "Baggage Reconcillation" am Flughafen, bei dem die Koffer von einem Flughafenangestellten vom Band in verschiedene Container oder Trolleys sortiert werden. Sind jedoch in diesem Beispiel mehrere RFID Transponder im Empfangsbereich des RFID Lesegerätes, so ist es derzeit nicht möglich, einen einzelnen Koffer mit einem Ultrahochfrequenz RFID Transponder, der gerade sortiert werden soll, aus einer Menge weiterer Koffer im Empfangsbereich des RFID Lesegerätes zu identifizieren, umso mit diesem exklusiv zu kommunizieren. Eine derartige exklusive Kommunikation könnte beispielsweise dem Ziel dienen, den Flughafenangestellten bei der Zuordnung dieses einzelnen Koffers zu unterstützen.

EP 1 020 813 offenbart ein System mit einem RFID Lesegerät und einer RFID Transponder einheit.

Der Erfindung liegt daher die Aufgabe zu Grunde, eine gezielte exklusive Kommunikation zwischen einem bestimmten RFID Transponder und einem RFID Lesegerät, in dessen Empfangsbereich sich noch weitere RFID Transponder befinden, zu ermöglichen.

Diese Aufgabe wird durch ein System mit einem RFID Lesegerät und einer RFID Transpondereinheit gelöst, wobei die RFID Transpondereinheit
- einen Beschleunigungssensor zur Messung von Beschleunigungen, die die RFID Transpondereinheit erfährt,
- einem Speicher für einen Schwellwert,
- eine Verarbeitungseinheit zum Vergleich gemessener Beschleunigungen mit dem Schwellwert und
- eine Sendeeinheit zum Senden einer die Transpondereinheit eindeutig kennzeichnenden Kennung und eines Statussignals, das eine Überschreitung des Schwellwertes durch einen gemessenen Beschleunigungswert signalisiert,
aufweist, wobei das RFID Lesegerät (1) dazu eingerichtet ist, die Transpondereinheit bei Empfang besagten Statussignals eindeutig anhand der Kennung zu identifizieren.

Vorteilhafte Ausführungsformen der Erfindung sind in den abhängigen Ansprüchen genannt.

Der Kerngedanke der Erfindung liegt in einer automatischen Triggerung des Systems, sobald eine Beschleunigung mithilfe des Beschleunigungssensors gemessen wird, die den im Speicher abgelegten Schwellwert überschreitet. Sobald dies geschieht, sendet der RFID Transponder das Statussignal aus, das wiederum dem RFID Lesegerät signalisiert, dass eine Kommunikation zwischen dem besagten RFID Transponder und dem RFID Lesegerät stattfinden soll. Damit das RFID Lesegerät weiß, mit welchem Transponder es kommuniziert, sendet der RFID Transponder darüberhinaus die Kennung, anhand der das RFID Lesegerät den Transponder eindeutig identifizieren kann. Auf diese Art und Weise ist es also möglich, dass das RFID Lesegerät nunmehr gezielt mit dem RFID Transponder kommunizieren kann, auch dann, wenn mehrere weitere RFID Transponder im Empfangsbereich des RFID Lesegerätes angeordnet sind. Es findet also eine Art exklusive Kommunikation zwischen dem RFID Lesegerät und dem beschleunigten RFID Transponder statt.

Unter einer exklusiven Kommunikation ist in diesem Zusammenhang zu verstehen, dass das RFID Lesegerät Daten ausschließlich von dem Transponder empfängt und einer späteren Auswertung zur Verfügung stellt oder nur Daten zu dem Transponder ausgibt, der die besagte Kennung sendet. Dies ist z.B. dann sinnvoll, wenn nur Daten bezüglich eines bewegten Objektes protokolliert werden sollen oder nur Daten bezüglich des bewegten Objektes für einen Anwender ausgegeben werden sollen.

Solange das Statussignal nicht von dem RFID Transponder ausgesendet wird, verhält sich dieser wie ein handelsüblicher RFID Transponder und kann gegebenenfalls gleichzeitig mit weiteren RFID Transponder im Empfangsbereich des RFID Lesegerätes selektiert werden. Die Sendung des Statussignals geschieht, wenn die Verarbeitungseinheit, die beispielsweise als Mikroprozessor ausgeführt werden kann, eine Überschreitung des im Speicher abgelegten Schwellwertes durch eine gemessene Beschleunigung feststellt. Hierbei hängt es von dem Anwendungsfall ab, ob und wenn ja wie lange das Statussignal gesendet wird, wenn der gemessene Beschleunigungswert den Schwellwert wieder unterschreitet, nachdem er einmal den Schwellwert zuvor überschritten hatte.

Durch Anpassung des Schwellwertes im Speicher kann das System gezielt für verschiedene Anwendungsfälle eingerichtet werden. Eine derartige Anpassung kann mithilfe des RFID Lesegerätes durchgeführt werden, wenn dieses als Schreib-/Lesegerät ausgeführt ist. In einem solchen Fall kann der Schwellwert einfach von dem Schreib-/Lesegerät zu der Transpondereinheit gesendet werden, wo er dann im Speicher abgelegt wird. In dem Speicher kann nicht nur ein singulärer Schwellwert abgelegt werden. Es ist auch denkbar und von der Erfindung umfasst, dass im Speicher der RFID Transpondereinheit beliebige Beschleunigungswerte beispielsweise in Form von Intervallbändern vorgegeben werden, die zu einer Triggerung führen.

Die erfindungsgemäße RFID Transpondereinheit kann beispielsweise als so genanntes SmartLabel ausgeführt werden. Hierbei handelt es sich um sehr flacher Tags, die samt Antenne auf einer Folie ausgeführt werden.

In vorteilhafter Ausgestaltung der Erfindung sind die RFID Transpondereinheit und das RFID Lesegerät zur Kommunikation über ein Ultrahochfrequenzfeld eingerichtet. RFID Systeme, die im Ultrahochfrequenzbereich arbeiten, ermöglichen prinzipiell die Kommunikation zwischen Transponder und Schreib- beziehungsweise Lesegerät über relativ große Entfernungen hinweg. Aufgrund dessen wird die RFID Technologie im Ultrahochfrequenzbereich gerne für Anwendungen in der Logistik eingesetzt, wo häufig mehrere RFID Transponder gleichzeitig ausgelesen werden müssen. Jedoch kommt es auch hier wie eingangs erwähnt manchmal vor, dass einzelne RFID Transponder gezielt ausgelesen oder beschrieben werden sollen. Durch die beschleunigungsabhängige Triggerung des RFID Transponder und die damit verbundene Aussendung des Statussignals erlaubt die Erfindung eine selektive, exklusive Kommunikation zwischen einem einzelnen beschleunigten RFID Transponder und dem RFID Lesegerät auch bei einer solchen Anwendung.

Da der Beschleunigungssensors mit Energie versorgt werden muss, kann der Energieverbrauch der RFID Transpondereinheit in weiterer vorteilhafter Ausgestaltung der Erfindung dadurch reduziert werden, dass die RFID Transpondereinheit Mittel aufweist zum Detektieren eines Eintritts der RFID Transpondereinheit in ein für eine Kommunikation mit dem RFID Lesegerät ausreichendes elektromagnetisches Feld und zum automatischen Einschalten des Beschleunigungssensors, sobald ein solcher Eintritt erfolgt ist. Auf diese Art und Weise wird verhindert, dass der Beschleunigungssensor aktiv ist, obwohl die Transpondereinheit aufgrund ihrer Entfernung zum RFID Lesegerät überhaupt nicht in der Lage ist, mit diesem zu kommunizieren.

Je nach Anwendungsfall können unterschiedliche Zeiten sinnvoll sein, während denen das Statussignal nach einer einmaligen Überschreitung des Schwellwertes gesendet wird beziehungsweise während denen eine gezielte exklusive Kommunikation zwischen der RFID Transpondereinheit und dem RFID Lesegerät stattfindet. Bei einer weiteren vorteilhaften Ausführungsform des Systems weist die RFID Transpondereinheit einen Timer zu Vorgabe eines Zeitintervalls für die Dauer des Sendens des Statussignals auf.

Auf besonders einfache Art und Weise kann der Beschleunigungssensor zusätzlich manuell ein und ausgeschaltet werden, wenn in weiterer vorteilhafter Ausgestaltung der Erfindung das RFID Lesegerät als Schreib-/Lesegerät mit Mitteln zur Aktivierung des Beschleunigungssensors ausgeführt ist.

Häufig sollen RFID Systeme dazu eingesetzt werden, gewisse Prozesse, die ein Objekt - beispielsweise ein empfindliches kommerzielles Produkt - während seiner Herstellung oder während seines Transportes erfährt, auch noch im Nachhinein nachvollziehbar zu machen. Insbesondere hierfür ist eine Ausgestaltung der Erfindung von Vorteil, bei der das System eine Protokollierungssoftware umfasst, die zur Protokollierung von Behandlungen eines mit der RFID Transpondereinheit versehenen Objektes bei Empfang des Statussignals eingerichtet ist. Soll beispielsweise ein Vorgang protokolliert werden, bei denen ein mit einem RFID Transponder versehenes Objekt von einem Förderband entfernt wird, so würde der Beschleunigungssensors die Beschleunigung erfassen, die das Objekt beim Herunternehmen vom Förderband erfährt. Vorausgesetzt, dass die Beschleunigung ausreicht, den Schwellwert zu überschreiten, würde dies zu einer Aussendung der Kennung und des Statussignals führen. Hierdurch würde dem RFID Lesegerät beziehungsweise der Protokollierungssoftware signalisiert, dass der über die Kennung identifizierte Transponder und damit das zugehörige Objekt vom Förderband entfernt wurden.

Die RFID Technologie kann auch dazu eingesetzt werden, in weiterer vorteilhafter Ausgestaltung der Erfindung gezielt Handlungsanweisungen für einen Anwender auszugeben, die sich auf ein mit einer Transpondereinheit versehenes Objekt beziehen. Eine derartige Ausgestaltung kennzeichnet sich dadurch, dass das System eine Anweisungssoftware umfasst, die zur Ausgabe von Handlungsanweisungen bezüglich eines mit der RFID Transpondereinheit versehenen Objektes bei Empfang des Statussignals eingerichtet ist.

Im Folgenden wird die Erfindung anhand der in den Figuren dargestellten Ausführungsbeispiele näher beschrieben und erläutert. Es zeigen:
- FIG 1: eine schematische Darstellung einer Ausführungsform des erfindungsgemäßen Systems mit mehreren RFID Transponder einhalten, die sich im Empfangsbereich eines RFID Lesegerätes befinden und
- FIG 2: ein Anwendungsbeispiel für eine Ausführungsform des erfindungsgemäßen Systems.

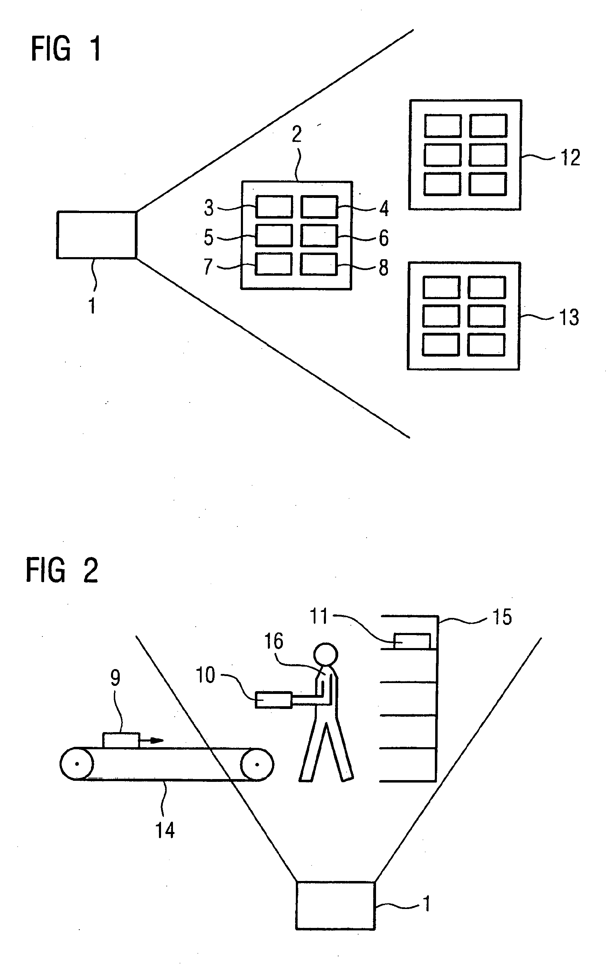

Figur 1 zeigt eine schematische Darstellung einer Ausführungsform des erfindungsgemäßen Systems mit mehreren RFID Transpondereinheiten die sich im Empfangsbereich eines RFID Lesegerätes 1 befinden. Neben einer RFID Transpondereinheit 2, befinden sich noch zwei weitere RFID Transpondereinheiten 12, 13 in dem elektromagnetischen Feld der RFID Lesereinheit 1.

Die räumliche Ausdehnung des elektromagnetischen Feldes und damit des Empfangsbereiches der RFID Lesereinheit 1 hängt entscheidend von der Frequenz ab, mit der das dargestellte RFID System arbeitet. In diesem Fall sei angenommen, dass über ein Ultrahochfrequenzfeld kommuniziert wird. Bei dem gezeigten Szenario ist es also möglich, dass das RFID Lesegerät 1 Daten sowohl von der RFID Transpondereinheit 2 als auch von den beiden weiteren RFID Transpondereinheiten 12, 13 gleichzeitig ausliest.

Jede RFID Transpondereinheit 2, 12, 13 umfasst einen Beschleunigungssensor 3, einen Speicher 4, eine Verarbeitungseinheit 5, eine Sendeeinheit 6, einen Timer 7 sowie eine Energiequelle 8, bei der es sich beispielsweise um eine Batterie handelt. Mit dem Beschleunigungssensor 3 werden Beschleunigungswerte erfasst, die die RFID Transpondereinheit 2 beziehungsweise das Objekt, welches die RFID Transpondereinheit 2 trägt, erfährt. In dem Speicher 6 ist ein Schwellwert für die gemessenen Beschleunigungen abgelegt. Die Verarbeitungseinheit 5 vergleicht die gemessenen Beschleunigungswerte mit dem im Speicher 6 abgelegten Schwellwert. Sobald es zu einer Überschreitung dieses Schwellwertes kommt, wird für die Dauer eines durch den Timer 7 festgelegten Wertes ein Statussignal an die RFID Lesereinheit 1 zusammen mit einer Kennung gesendet. Anhand des Statussignals erfährt das Lesegerät 1 beziehungsweise eine geeignete Erkennungssoftware, dass das Objekt, welches die RFID Transpondereinheit 2 trägt, beschleunigt wurde und interpretiert dies als Wunsch, exklusiv einem Datenaustausch mit der besagten RFID Transpondereinheit 2 zu vollziehen. Anhand der Kennung kann das Lesegerät 1 beziehungsweise die Erkennungssoftware feststellen, mit welcher der dargestellten RFID Transpondereinheiten 2, 12, 13 dieser exklusive Datenaustausch stattfindet. Auf diese Art und Weise ist das Lesegerät 1 in die Lage versetzt, gezielt und ausschließlich nur mit dem bewegten RFID Transponder 2 zu kommunizieren.

Figur 2 zeigt ein Anwendungsbeispiel für eine Ausführungsform des erfindungsgemäßen Systems im Bereich der Logistik. Auf einem Förderband 14 transportierte Objekte 9, 10, 11 sollen von einem Lagerarbeiter 16 nach einer bestimmten Vorschrift in einem Regal 15 untergebracht werden. Ziel der Anwendung des RFID Systems ist es, den Lagerarbeiter 16 bei der Zuordnung der Objekte 9, 10, 11 zu den einzelnen Lagerplätzen des Regals 15 zu unterstützen.

Das RFID Lesegerät 1 ist als Ultrahochfrequenz RFID Schreib-/Lesegerät ausgeführt, da es in der Lage sein soll, mehrere Objekte 9, 10, 11 auf dem Transportweg oder im Lager gemeinsam zu überprüfen.

Die Objekte 9, 10, 11 sind jeweils mit einer RFID Transpondereinheit 2 ausgestattet, wie sie schon im Zusammenhang mit Figur 1 beschrieben wurde. Um die Energiequelle 8 zu schonen, sind diese RFID Transpondereinheiten 2 weiterhin dazu ausgeführt, dass sie sich in einem inaktiven Modus befinden, solange sie sich außerhalb der Reichweite des Empfangsbereichs des RFID Schreib-/Lesegerät befinden. Dies gilt auch dann, wenn die RFID Transpondereinheiten 2 eine Beschleunigung erfahren. Auch der Beschleunigungssensor 3 ist solange inaktiv, solange die RFID Transpondereinheit außerhalb des Empfangsbereiches positioniert ist.

Die RFID Transpondereinheiten 2, die in den Empfangsbereich des RFID Schreib-/Lesegerät eintreten, schalten automatisch von dem inaktiven Modus in einen aktiven Modus und senden jeweils ihre Kennung und eventuelle Zusatzinformationen aus. Diese können gleichzeitig von dem RFID Schreib-/Lesegerät erfasst werden, so dass beispielsweise der Lagerbestand sehr schnell erfasst werden kann.

Sobald der Lagerarbeiter 16 ein Objekt 9, 10, 11 vom Förderband 14 entfernt, erfährt der zugehörige RFID Transponder eine Beschleunigung, die von seinem Beschleunigungssensor 3 erfasst wird. Der im Speicher 4 der RFID Transpondereinheit 2 abgelegte Schwellwert ist so bemessen, dass er bei einer typischen Beschleunigung, die beim Herunternehmen des Objektes 10 vom Förderband 14 entsteht, sicher überschritten wird. Dies wird von der Verarbeitungseinheit 5 erkannt, so dass das Statussignal, welches dem Schreib-/Lesegerät eine Beschleunigung signalisiert, gesendet wird. Eine Anweisungssoftware des Systems, die das bewegte Objekt 10 anhand der ebenfalls von der RFID Transpondereinheit 2 gesendeten Kennung identifizieren kann, erzeugt schließlich für den Lagerarbeiter 16 eine Anweisung, die besagt, in welchen Lagerplatz des Regals 15 das bewegte Objekt 10 gestellt werden soll.

Das erfindungsgemäße System ermöglicht es also auf sehr einfache Art und Weise ein Ultrahochfrequenz RFID System, welches prinzipiell in der Lage ist über eine sehr große Reichweite mit mehreren Transpondern zu kommunizieren, dazu zu ermächtigen, eine gezielte exklusive Kommunikation mit einem einzelnen beschleunigten Transponder aufzubauen und/oder gezielt Daten zu dem beschleunigten Transponder auszugeben oder zu protokollieren. Die Tatsache, dass ein solcher Transponder beschleunigt wurde, erkennt das zugehörige Lesegerät anhand des ausgesendeten Statussignals. Identifizieren kann das Lesegerät den besagten Transponder schließlich anhand der Kennung, die dieser ebenfalls aussendet.

## Patentansprüche

1. System mit einem RFID Lesegerät (1) und einer RFID Transpondereinheit (2), wobei die RFID Transpondereinheit (2)
- einen Beschleunigungssensor (3) zur Messung von Beschleunigungen, die die RFID Transpondereinheit (2) erfährt,
- einem Speicher (4) für einen Schwellwert,
- eine Verarbeitungseinheit (5) zum Vergleich gemessener Beschleunigungen mit dem Schwellwert und
- eine Sendeeinheit (6) zum Senden einer die Transpondereinheit eindeutig kennzeichnenden Kennung und eines Statussignals, das eine Überschreitung des Schwellwertes durch einen gemessenen Beschleunigungswert signalisiert,
aufweist, wobei das RFID Lesegerät (1) dazu eingerichtet ist, die Transpondereinheit bei Empfang besagten Statussignals eindeutig anhand der Kennung zu identifizieren.

2. System nach Anspruch 1,
wobei die RFID Transpondereinheit (2) und das RFID Lesegerät (1) zur Kommunikation über ein Ultrahochfrequenzfeld eingerichtet sind.

3. System nach einem der Ansprüche 1 oder 2,
wobei die RFID Transpondereinheit (2) Mittel aufweist zum Detektieren eines Eintritts der RFID Transpondereinheit (2) in ein für eine Kommunikation mit dem RFID Lesegerät (1) ausreichendes elektromagnetisches Feld und zum automatischen Einschalten des Beschleunigungssensors (3), sobald ein solcher Eintritt erfolgt ist.

4. System nach einem der Ansprüche 1 bis 3,
wobei das System einen Timer (7) zur Vorgabe eines Zeitinter-valls für die Dauer des Sendens des Statussignals aufweist.

5. System nach einem der Ansprüche 1 bis 4,
wobei das RFID Lesegerät (1) als Schreib-/Lesegerät mit Mitteln zur Aktivierung des Beschleunigungssensors (3) ausgeführt ist.

6. System nach einem der Ansprüche 1 bis 5,
wobei das System eine Protokollierungssoftware umfasst, die zur Protokollierung von Behandlungen eines mit der RFID Transpondereinheit (2) versehenen Objektes (9,10,11) bei Empfang des Statussignals eingerichtet ist.

7. System nach einem der Ansprüche 1 bis 5,
wobei das System eine Anweisungssoftware umfasst, die zur Ausgabe von Handlungsanweisungen bezüglich eines mit der RFID Transpondereinheit (2) versehenen Objektes (9,10,11) bei Empfang des Statussignals eingerichtet ist.

## Claims

1. System having an RFID reader (1) and an RFID transponder unit (2), wherein the RFID transponder unit (2) has
- an acceleration sensor (3) for measuring accelerations that the RFID transponder unit (2) experiences,
- a memory unit (4) for a threshold value,
- a processing unit (5) for comparing measured accelerations with the threshold value, and
- a transmitting unit (6) for sending an identifier that explicitly denotes the transponder unit and a status signal that signals when the threshold value is exceeded by a measured acceleration value,
wherein the RFID reader (1) is set up to explicitly identify the transponder unit using the identifier when said status signal is received.

2. System according to Claim 1,
wherein the RFID transponder unit (2) and the RFID reader (1) are set up for communication via an ultra high frequency field.

3. System according to either of Claims 1 and 2,
wherein the RFID transponder unit (2) has means for detecting entry of the RFID transponder unit (2) into an electromagnetic field that is sufficient for communication with the RFID reader (1) and for automatically switching on the acceleration sensor (3) as soon as such entry has occurred.

4. System according to one of Claims 1 to 3,
wherein the system has a timer (7) for prescribing a time period for the duration of sending of the status signal.

5. System according to one of Claims 1 to 4,
wherein the RFID reader (1) is embodied as a writer/reader having means for activating the acceleration sensor (3).

6. System according to one of Claims 1 to 5,
wherein the system comprises a piece of logging software that is set up to log treatments for an object (9, 10, 11) provided with the RFID transponder unit (2) when the status signal is received.

7. System according to one of Claims 1 to 5,
wherein the system comprises a piece of instruction software that is set up to output action instructions for an object (9, 10, 11) provided with the RFID transponder unit (2) when the status signal is received.

## Revendications

1. Système muni d'un lecteur RFID (1) et d'une unité de transpondeur RFID (2), l'unité de transpondeur RFID (2) présentant
- un capteur d'accélération (3) pour la mesure d'accélérations que l'unité de transpondeur RFID (2) subit,
- une mémoire (4) pour une valeur seuil,
- une unité de traitement (5) destinée à comparer des accélérations mesurées à la valeur seuil et
- une unité émettrice (6) destinée à émettre une identification caractérisant l'unité de transpondeur de manière univoque et un signal d'état qui signalise un dépassement de la valeur seuil au moyen d'une valeur d'accélération mesurée,
le lecteur RFID (1) étant configuré pour identifier l'unité de transpondeur de manière univoque à l'aide de l'identification lors de la réception du dit signal d'état.

2. Système selon la revendication 1,
l'unité de transpondeur RFID (2) et le lecteur RFID (1) étant configurés pour la communication par l'intermédiaire d'un champ à ultra-haute fréquence.

3. Système selon la revendication 1 ou 2,
l'unité de transpondeur RFID (2) présentant des moyens pour détecter une entrée de l'unité de transpondeur RFID (2) dans un champ électromagnétique suffisant pour une communication avec le lecteur RFID (1) et pour la connexion automatique du capteur d'accélération (3) dès qu'une telle entrée a eu lieu.

4. Système selon l'une quelconque des revendications 1 à 3,
le système présentant une horloge à minuterie (7) pour indiquer un intervalle de temps pour la durée de l'émission du signal d'état.

5. Système selon l'une quelconque des revendications 1 à 4,
le lecteur RFID (1) étant réalisé comme appareil enregistreur/lecteur muni de moyens pour activer le capteur d'accélération (3).

6. Système selon l'une quelconque des revendications 1 à 5,
le système comprenant un logiciel d'enregistrement de protocoles qui est configuré pour enregistrer des traitements d'un objet (9, 10, 11) muni de l'unité de transpondeur RFID (2), lors de la réception du signal d'état.

7. Système selon l'une quelconque des revendications 1 à 5,
le système comprenant un logiciel d'instructions qui est configuré pour la sortie d'instructions d'actions en rapport avec un objet (9, 10, 11) muni de l'unité de transpondeur RFID (2), lors de la réception du signal d'état.
